# EUROPEAN PATENT SPECIFICATION

(11) **EP 4 382 009 B1**
(45) Date of publication and mention of the grant of the patent: **09.07.2025**
(21) Application number: 23020537.9
(22) Date of filing: 04.12.2023
(51) Int. Cl.: A47J 37/06

(54) **IMPROVED ELECTRIC PIZZA OVEN**
VERBESSERTER ELEKTRISCHER PIZZAOFEN
FOUR À PIZZA ÉLECTRIQUE AMÉLIORÉ

(30) Priority: 05.12.2022 IT 202200025017
(43) Date of publication of application: 12.06.2024
(73) Proprietor: Romani, Alex, 41013 Castelfranco Emilia (MO) (IT)
(72) Inventor: ROMANI, Bruno, 41013 Castelfranco Emilia (MO) (IT)
(74) Representative: Gasparini, Alberto

(56) References cited:
- CN-A- 106 136 951
- CN-A- 112 155 438
- GB-A- 2 263 764
- US-A1- 2021 388 992

## Description

### Field of application

The present invention relates to an improved electric pizza oven, i.e., an apparatus for cooking pizza indoors and which allows a perfect cooking to be achieved with reduced oven dimensions. The oven is for domestic use, but comprises improvements such as to make a pizza with cooking quality comparable to the larger ovens used for pizzerias.

### Background art

The state of the art comprises electric pizza ovens which allow to cook a single pizza on a refractory stone in a protected environment and at the ideal temperature of 400-500 °C, necessary to obtain a fragrance and correct cooking of the product introduced.

The electric ovens for domestic use made so far consist of a refractory plate which is heated by an underlying electrical heating element and, to achieve the complete cooking of the pizza, also by an electrical heating element placed above the pizza to be cooked, the heating elements are placed within the structure of the base of the oven, for the lower heating element, and in the lid for the upper heating element. In the art, if it is possible to protect the lower part, i.e., the compartment of the less powerful lower electrical heating element, from high temperatures, towards the support surface, the possibility of protecting the upper part, or lid of the electric oven is somewhat lacking, since the more powerful heating element is present, it occurs that, in use, the user sees and manoeuvres the upper part to open and close the still-hot lid, obviously with the hot heating element inserted therein.

The known apparatuses in the art are made with an insulation of the lid to decrease the temperature perceived by the user in the accidental contact with the outer surface of the lid. In addition, electric ovens for cooking pizzas for domestic use are known in which ears protruding upwards have been attached to the lid, made of heat-resistant and non-conductive plastic material, so as to prevent the user from touching the outer surface of the lid, while the warning to the user to not touch the surface of the lid during use remains highlighted.

From document IT 202021000000341 it is known to arrange on the lid itself a further shell spaced from the outer surface of the lid so as to interpose a layer of air which by convection reduces the temperature of the shell with respect to the insulated lid below.

Moreover, the air in the resulting cavity insufficiently reduces the perceived temperature on the outer surface of the shell. Therefore, the problem remains of avoiding unwanted contact between the outer surface of the lid and the user's hands and consequently protecting the same hands from accidental contact with the lid in its manoeuvring.

Another pizza oven is known from GB 2263764 A.

Therefore, the technical problem underlying the present invention is to make an improved electric pizza oven in which a more effective thermal limitation is achieved of the outer temperature of the surfaces which the user is led to touch in the use of the electric pizza oven described herein.

An inherent object of the previous technical problem is to combine and keep the dimensions of the electric oven limited even in the presence of a product, pizza, which is made with larger dimensions as is now customary, even of 31 cm in diameter which pizzerias normally make for customers.

A further aspect of the technical problem concerns the creation of a shape of the improved electric pizza oven which is completely free of high-temperature contact points with the user's hands, so as to allow prolonged use for more than just one pizza, i.e., allowing the domestic user to cook the desired pizzas in series and avoid temperature losses in the apparatus for the unloading and loading manoeuvres of the cooked pizzas and those to be cooked.

### Summary of the Invention

This technical problem is solved, according to the present invention, by an improved electric pizza oven, comprising: a refractory stone cooking surface; an electrical heating element below the cooking surface, protected towards the support surface of the oven; an upper electrical heating element inserted in the upper openable lid and facing the cooking surface; a thermal insulation placed in the thickness of the upper lid; outside the lid a cover to determine a cavity for the passage of convection and cooling air of the upper cover of the lid; characterised in that it has the cover of the lid consisting of an upper half-shell with cooling air venting openings of an upper cavity towards the outside of the outer surface of the half-shell protecting the lid with electrical heating element; the cooling air forced by an upper fan to cross the venting openings and an edge of the upper cavity.

Furthermore, a specific embodiment is present, interposed between the protected lower heating element and the support surface, a lower half-shell to determine a lower compartment with cooling air venting openings of an inverse shell towards the outside to protect the lower electrical heating element, cooling air forced by a lower fan.

Moreover, a further improved embodiment of the upper fan is positioned in the rear part of the upper half-shell.

In a preferred embodiment the lower fan is positioned in the rear part of the lower half-shell.

In a specific and preferred form of application, the fan(s) push air from the outside into the upper cavity or also the lower compartment, causing the air to exit from the venting openings or from the edge of the upper cavity.

Finally, in an advantageous embodiment the support of the upper half-shell is made by means of spacers with respect to the upper surface of the insulated lid.

Further features and advantages of the present invention, in the creation of an improved electric pizza oven, will result from the description, made below, of the construction of an improved electric pizza oven, as illustrated above and given by way of non-limiting indication with reference to the four attached drawing tables.

### Brief description of the drawings

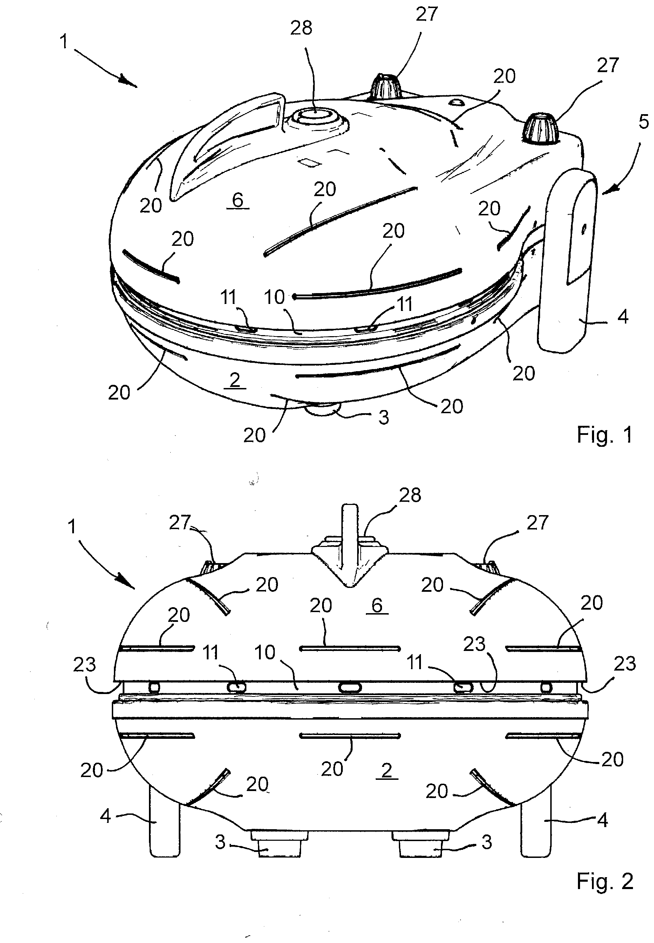

Figure 1 depicts a schematic perspective view of an improved electric pizza oven according to the invention; it has the lid closed which, in use, is lifted to load the pizza to be cooked and to extract it at the end of cooking;
Figure 2 depicts a schematic front view of the improved oven of Figure 1;

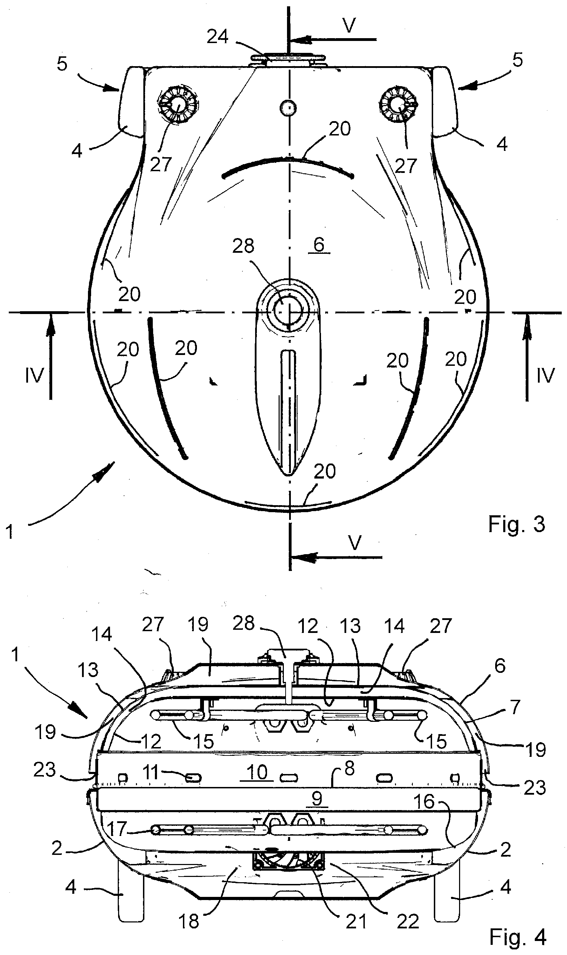

Figure 3 depicts a schematic top view of the improved oven of Figure 1;
Figure 4 depicts a schematic cross section of line IV-IV of Figure 3 with the improved oven closed;

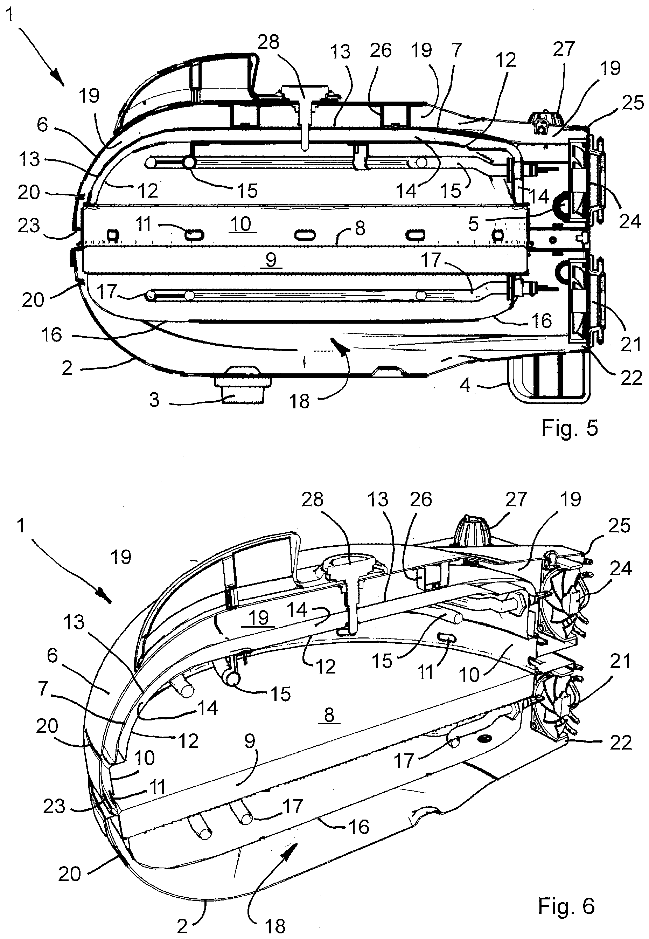

Figure 5 depicts a schematic longitudinal section of line V-V of Figure 3 with the improved oven closed;
Figure 6 depicts a schematic longitudinal section with a perspective view of Figure 5, inclined from above;

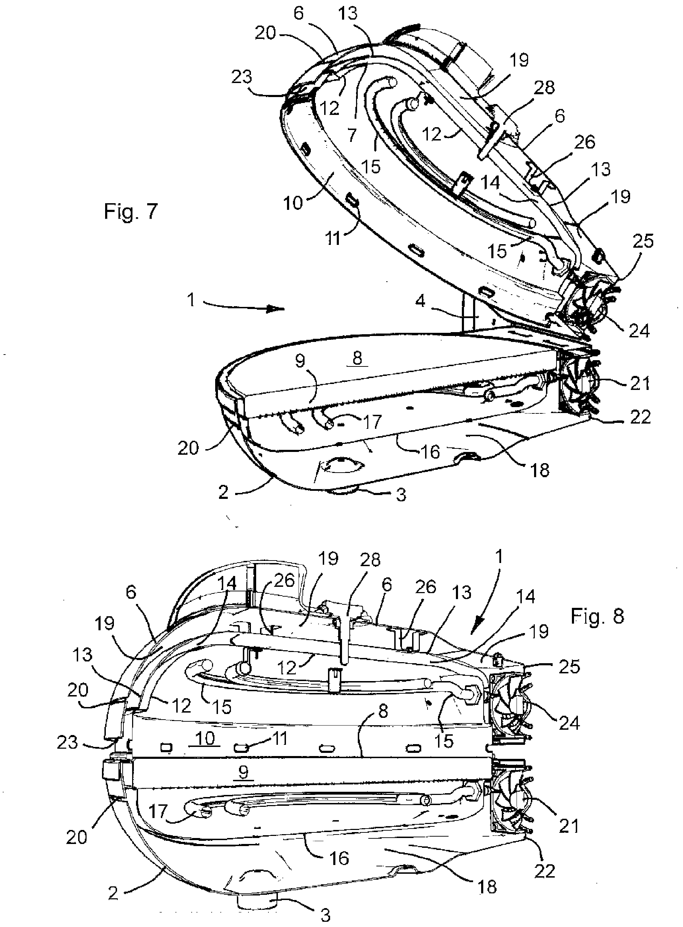

Figure 7 depicts a schematic section in longitudinal centreline with a perspective view and the lid open;
Figure 8 depicts a schematic longitudinal section with a perspective view of Figure 5, here instead inclined from below.

### Detailed description of an illustrated embodiment

The figures show the improved electric pizza oven 1, made with two half-shells of which the lower half-shell 2 is provided with central feet 3 and rear side feet 4; the rear feet 4 have a hinge 5 for the support and rotation of the upper half-shell 6 to make a lid 7 on the cooking surface 8 in refractory stone 9; between the lid 7 and the cooking surface 8 there is a peripheral metal band 10 with venting openings 11; the lid 7 consists of a double metal shell 12, lower, and 13, upper, with interposed insulating material 14 suitable for the high temperature generated by the upper electrical heating element 15, which is kept suspended from the lower shell 12 of the lid and electrically connected near the aforesaid hinge 5. Furthermore, in the lower half-shell 2 there is an inverse shell 16 placed to support the refractory stone 9 and containing the lower electrical heating element 17. Between the lower and upper half-shells and the respective inverse 16 and upper double 12 and 13 shells, there is respectively a lower compartment 18 and an upper cavity 19. The lower compartment has venting openings 20 for cooling air pushed inside the compartment by a lower fan 21, placed in the rear part 22 of the lower half-shell 2. Similarly, in the upper half-shell 6 there are venting openings 20 which, together with the lower edge 23 of the upper cavity 19 free towards the outside, allow the air present in the upper cavity 19 to exit into the environment pushed by an upper fan 24, placed in the rear part 25 of the upper half-shell 6. The connection between the lid 7 and the upper half-shell 6 is made with spacers 26 distributed in the upper cavity 19. Finally, the improved electric pizza oven comprises selectors 27 for regulating the heating elements and a thermometer 28 for controlling the temperature; obviously, no electrical connection is shown in the figures between the indicated parts, which are present, but for simplicity are not depicted.

The operation of an improved electric pizza oven occurs with the heating of the electrical heating elements, upper 15 and lower 17, thus heating the refractory plate 9; once the expected temperature of 400 °C is reached, the pizza to be cooked is introduced by lifting the lid 7, with the upper half-shell 6, then closed so as to face the upper electrical heating element 15, the more powerful of the two, on the pizza to be cooked.

In this operation with the power of the upper electrical heating element 15 high, the temperature also reaches 500 °C for optimal and rapid cooking of the pizza, the upper fan 24 is active and pushes the air present in the upper cavity 19 outside from the edge of the cavity 23 and from the venting openings 20 present in the upper half-shell 6. Similarly, the forced cooling of the outer surface of the lower half-shell 2 occurs due to the thrust of the lower fan 21 which pushes the air contained in the lower compartment 18 outside through said venting openings 20. Furthermore, in the exit of the air from the edge 23, of the upper cavity 19, it also cools the peripheral metal band 10, so as to limit the temperature thereof.

The advantages of an improved electrical pizza oven, according to the invention, can be summarized as follows.

In use with the electric pizza oven described, the user does not encounter high-temperature surfaces with the oven closed since the forced ventilation of the air in the upper cavity between the insulated lid 7 and the upper half-shell 6, allows the visible surface of the upper half-shell 6 to avoid reaching undesired temperatures, thus within the values allowed by the safety regulations for these household appliances of about 60 °C.

The forced cooling effect, in addition to in the upper half-shell 6, is also manifested in the lower half-shell 2 with the thrust of the forced air made by the lower fan 21 into the lower compartment 18, thus avoiding overheating the surface on which the apparatus is placed.

The result deriving from forced air cooling makes it possible to achieve the proposed objective of reducing the temperatures of the outer surfaces of the hot parts of the cooking apparatus to limited values.

Obviously, those skilled in the art, in order to satisfy specific and contingent requirements, may make numerous modifications to an improved electric pizza oven as described above, all nevertheless falling within the scope of protection of the present invention as defined by the following claims. Thus, although less conveniently, possible constructive variants can be envisaged in the positioning of one or both fans which see to pushing the air outside of the lower compartment 18 and the upper cavity 19, being able to be placed in any point of the upper cavity 19 or of the lower compartment 18. Moreover, an implementation limited to the application of forced cooling only in the upper cavity 19 can be envisaged, although various and prolonged experiments have confirmed that the best solution is obtained only by also cooling the lower compartment 18 with forced air. Finally, the intended thrust direction of the cooling air towards the inside of the upper cavity (19) can be, albeit singly advantageously, reversed by sucking the air from the venting openings (20) and from the edge (23) described.

## Claims

1. Improved electric pizza oven comprising: a cooking surface (8); an electrical heating element (17) below the cooking surface protected towards the oven support surface; an upper electrical heating element (15) inserted in the upper openable lid (7) and facing the cooking surface; a thermal insulation (14) placed in the thickness of the upper lid; outside the lid a cover determining a cavity for the passage of convection and cooling air of the upper cover of the lid; **characterised in that** the cooking surface is from refractory stone (9) and **in that** it has the cover of the lid consisting of an upper half-shell (6) with venting openings (20) of the cooling air of an upper cavity (19) towards the outside of the outer surface of the half-shell to protect the lid (7) with electrical heating element (15); the cooling air forced by an upper fan (24) to cross the venting openings and an edge (23) of the upper cavity (19).

2. Electric pizza oven according to claim 1, wherein a lower half-shell (2) is interposed between the protected lower heating element and the support surface to determine a lower compartment (18) with cooling air venting openings (20) of an inverse shell (16) towards the outside to protect the lower electrical heating element (17), cooling air forced by a lower fan (21).

3. Electric pizza oven according to claim 1 or 2, wherein the upper fan (24) is positioned in the rear part (25) of the upper half-shell (6).

4. Electric pizza oven according to claim 2, wherein the lower fan (21) is positioned in the rear part (22) of the lower half-shell (2).

5. Electric pizza oven according to claim 1-4, wherein the fan(s) push the air from the outside into the upper cavity (19) or also the lower compartment (18), letting the air exit from the venting openings (20) or from the edge (23) of the upper cavity (19).

6. Electric pizza oven, according to one of the preceding claims, wherein the support of the upper half-shell (6) is obtained by means of spacers (25) with respect to the upper surface (13) of the insulated lid (7).

## Patentansprüche

1. Verbesserter elektrischer Pizzaofen, umfassend: eine Kochfläche (8); ein elektrisches Heizelement (17) unterhalb der Kochfläche, das gegenüber der Ofenauflagefläche geschützt ist; ein oberes elektrisches Heizelement (15), das in den oberen, zu öffnenden Deckel (7) eingesetzt ist und der Kochfläche zugewandt ist; eine Wärmeisolierung (14), die in der Dicke des oberen Deckels angeordnet ist; außerhalb des Deckels eine Abdeckung, die einen Hohlraum für den Durchgang von Konvektions- und Kühlluft des oberen Deckels des Ofens bildet;
**dadurch gekennzeichnet, dass** die Kochfläche aus feuerfestem Stein (9) besteht und dass die Abdeckung des Deckels aus einer oberen Halbschale (6) mit Entlüftungsöffnungen (20) für die Kühlluft eines oberen Hohlraums (19) zur Außenseite der Außenfläche der Halbschale besteht, um den Deckel (7) mit dem elektrischen Heizelement (15) zu schützen; wobei die Kühlluft durch einen oberen Ventilator (24) gezwungen wird, über die Entlüftungsöffnungen und einen Rand (23) des oberen Hohlraums (19) zu strömen.

2. Elektrischer Pizzaofen nach Anspruch 1, wobei eine untere Halbschale (2) zwischen dem geschützten unteren Heizelement und der Auflagefläche angeordnet ist, um einen unteren Raum (18) mit Entlüftungsöffnungen (20) für die Kühlluft einer umgekehrten Schale (16) in Richtung der Außenseite zu bilden, um das untere elektrische Heizelement (17) zu schützen, wobei Kühlluft durch einen unteren Ventilator (21) gezwungen wird.

3. Elektrischer Pizzaofen nach Anspruch 1 oder 2, wobei der obere Ventilator (24) in dem hinteren Teil (25) der oberen Halbschale (6) angeordnet ist.

4. Elektrischer Pizzaofen nach Anspruch 2, wobei der untere Ventilator (21) in dem hinteren Teil (22) der unteren Halbschale (2) angeordnet ist.

5. Elektrischer Pizzaofen nach Anspruch 1-4, wobei der mindestens eine Ventilator die Luft von außen in den oberen Hohlraum (19) oder auch in den unteren Raum (18) drückt, sodass die Luft aus den Entlüftungsöffnungen (20) oder über den Rand (23) des oberen Hohlraums (19) austreten kann.

6. Elektrischer Pizzaofen nach einem der vorhergehenden Ansprüche, wobei die Halterung der oberen Halbschale (6) mittels Abstandshaltern (25) gegenüber der Oberseite (13) des isolierten Deckels (7) erfolgt.

## Revendications

1. Four à pizza électrique amélioré comprenant : une surface de cuisson (8) ; un élément chauffant électrique (17) en-dessous de la surface de cuisson protégé par rapport à la surface d'appui de four ; un élément chauffant électrique supérieur (15) inséré dans le couvercle ouvrant supérieur (7) et faisant face à la surface de cuisson ; une isolation thermique (14) placée dans l'épaisseur du couvercle supérieur ; à l'extérieur du couvercle un couvert déterminant une cavité pour le passage d'un air de convection et de refroidissement du couvert supérieur du couvercle ; **caractérisé en ce que** la surface de cuisson est fabriquée dans une pierre réfractaire (9) et **en ce qu'**elle présente le couvert du couvercle constitué d'une demi-coque supérieure (6) avec des ouvertures de ventilation (20) de l'air de refroidissement d'une cavité supérieure (19) orientées vers l'extérieur de la surface extérieure de la demi-coque pour protéger le couvercle (7) avec un élément chauffant électrique (15) ; l'air de refroidissement forcé par un ventilateur supérieur (24) à traverser les ouvertures de ventilation et un bord (23) de la cavité supérieure (19).

2. Four à pizza électrique selon la revendication 1, dans lequel une demi-coque inférieure (2) est intercalée entre l'élément chauffant inférieur protégé et la surface d'appui pour déterminer un compartiment inférieur (18) avec des ouvertures de ventilation d'air de refroidissement (20) d'une coque inversée (16), orientées vers l'extérieur pour protéger l'élément chauffant électrique inférieur (17), refroidissant de l'air forcé par un ventilateur inférieur (21).

3. Four à pizza électrique selon la revendication 1 ou 2, dans lequel le ventilateur supérieur (24) est positionné dans la partie arrière (25) de la demi-coque supérieure (6).

4. Four à pizza électrique selon la revendication 2, dans lequel le ventilateur inférieur (21) est positionné dans la partie arrière (22) de la demi-coque inférieure (2).

5. Four à pizza électrique selon la revendication 1 à 4, dans lequel le(s) ventilateur(s) poussent l'air depuis l'extérieur jusque dans la cavité supérieure (19) ou également le compartiment inférieur (18), laissant sortir l'air depuis les ouvertures de ventilation (20) ou depuis le bord (23) de la cavité supérieure (19).

6. Four à pizza électrique, selon l'une des revendications précédentes, dans lequel l'appui de la demi-coque supérieure (6) est obtenu au moyen d'espaceurs (25) par rapport à la surface supérieure (13) du couvercle (7) isolé.
